# EUROPÄISCHE PATENTSCHRIFT

(11) **EP 3 769 990 B1**
(45) Veröffentlichungstag und Bekanntmachung des Hinweises auf die Patenterteilung: **23.10.2024**
(21) Anmeldenummer: 20186845.2
(22) Anmeldetag: 21.07.2020
(51) Int. Cl.: B60K 7/00, B60K 17/04

(54) **TEILBARER RADANTRIEB**
DIVISIBLE WHEEL DRIVE
TRACTION À ROUES DIVISIBLE

(30) Priorität: 22.07.2019 DE 102019119775
(43) Veröffentlichungstag der Anmeldung: 27.01.2021
(73) Patentinhaber: Breuell & Hilgenfeldt GmbH, 22844 Norderstedt (DE)
(72) Erfinder: Klahn, Michael, 22844 Norderstedt (DE); Michel, Robert, 22844 Norderstedt (DE)
(74) Vertreter: RGTH

(56) Entgegenhaltungen:
- EP-A1- 2 800 668
- DE-A1- 102006 023 577
- GB-A- 1 559 276
- US-A1- 2005 236 198

## Beschreibung

Die Erfindung betrifft einen Radantrieb für ein Fahrzeug, welcher zumindest einen Motor, und ein Getriebe umfasst. Dabei besteht der Radantrieb aus mindestens zwei voneinandertrennbaren Einheiten, wobei im Falle derTrennung eine Einheit im Fahrzeug verbleibt und eine andere, welche in ein Rad des Fahrzeuges integriert ist, mit diesem gemeinsam abgenommen und auch getauscht werden kann.

### Stand der Technik

Üblicherweise befindet sich der Antrieb eines Fahrzeugs, beispielsweise ein Traktionsmotor und ein Getriebe, im Inneren des Fahrzeugs. Die Räder werden von außen montiert.

Meist werden die Reifen der Räder nach Kriterien des Verschleißes und der Beschädigung getauscht, wobei bei unterschiedlichen Fahrzeugtypen, wie Flurförderzeugen, fahrerlosen Transportsystemen und Gabelstaplern die Lebensdauer deutlich unterschiedlich sein kann. Die Verschleißkomponenten des Antriebssystems, wie Lager, Getriebe und Schmierstoffe, werden in der Regel aufgrund ihrer höheren Lebensdauer später getauscht und müssen deshalb gesondert ersetzt werden, was teilweise umfangreiche Arbeiten am Fahrzeug erfordert. Getriebe und Lager werden zudem oft nur nach einem Ausfall getauscht, nachdem das Fahrzeug einen Totalausfall erlitt. Um die Ausfälle zu vermeiden, wird häufig versucht, die Komponenten dauerfest zu dimensionieren, was allerdings hohe Produktkosten mit sich bringt.

Ein teilbarer Radantrieb ist beispielsweise aus der US 3 184 985 A bekannt, welche den Aufbau eines Rades und eines äußeren Endes einer Antriebsachse zeigt. Das Rad umfasst dabei ein Untersetzungsgetriebe, welches vom Antrieb, also dem Motor, getrennt werden kann.

Die EP 2 481 621 A1 offenbart ebenso eine Achsenantriebsanordnung, wobei hier die Spindel über einen Befestigungsflansch mit Befestigungsbolzen an einem Fahrzeug befestigt werden kann. Beim Verbinden der Spindel mit dem Antrieb im Fahrzeug kann eine innenverzahnte Aufnahme der Spindel eine Verbindung zur Antriebswelle des Fahrzeuges ermöglichen.

Eine Radnabe mit integriertem Planetengetriebe und Lamellenbremse wird in der WO 99/41118 A1 beschrieben, wobei diese aus zwei Baugruppen besteht. In der ersten Baugruppe befinden sich die Bremse mit Bremskolben und Bremslamellen zusammen mit dem Hohlrad des Planetengetriebes, eine zweite Baugruppe umfasst die Radnabe, die Planetenräder und die Radlager. Eine einfache Montage der beiden Baugruppen soll dadurch erleichtert werden.

Die EP 3 342 615 A1 beschreibt ein Untersetzungsgetriebe für einen Wagen, wobei das Getriebe von einem rotierenden Gehäuse umschlossen wird, welches mit dem Rad verbunden werden kann.

Die DE 10 2006 023577 A1 beschreibt ein in die Radnabe integriertes Getriebe, wobei das Getriebe insbesondere ein Planeten- oder Stufenplanetengetriebe ist. Über eine Welle ist das Getriebe mit einem Motor verbunden. Bei einerTrennung von Getriebe und Motor wird jedoch das Sonnenrad des Getriebes, welches mit der Motorwelle verbunden ist, aus dem Getriebe gezogen.

In der EP 2 800 668 A1 wird eine Motor-Getriebe-Einheit zum Antrieb eines Rades beschrieben, in der das Getriebe in einem Gehäuse und der Motor im zum Gehäuse gehörenden Deckel angebracht ist, wobei zwischen Motor und Getriebe eine Bremse angebracht sein kann. Die Antriebswelle des Motors ist dabei mit dem ersten Ritzel des Getriebes gekoppelt oder einstückig ausgeformt.

Die in der GB 1 559 276 A beschriebene Einheit aus Motor, Getriebe und Rad, welche am Fahrzeug befestigt werden kann, weist ein ins Rad integriertes Getriebe auf. Der Motor ist ebenfalls im gleichen Gehäuse auf der dem Getriebe gegenüberliegenden Seite eingebaut.

Die US 2005/236198 A1 offenbart ein in einem Fahrzeug angebrachtes Gehäuse, das einen Motor und ein Getriebe im Innern umfasst und dessen außenliegendes Ende mit einer Radnabe verbunden ist, wobei das Getriebe im Gehäuse an der außenliegenden Seite angebracht ist und der Motor an der innenliegenden Seite. Hier sind Motor und Getriebe separat angebracht, jedoch im gleichen Gehäuse.

Bei den bekannten Radantrieben ist jedoch keine einfache Trennung von Verschleißteilen und wertigen Komponenten, welche über die Betriebszeit des Fahrzeuges keinem großen Verschleiß unterliegen, möglich, was im Fall von Störungen, Beschädigungen oder bei Wartungsarbeiten einen nicht unerheblichen Aufwand in der Montage und Demontage der Komponenten nach sich zieht. Zwar gibt es auch schon bekannte Ausführungsformen, bei welchen das Getriebe des Radantriebes im Rad des Fahrzeuges integriert ist, hierbei sind jedoch entweder nicht alle Verschleißteile im Rad eingebaut oder die Einheit des Rades ist nicht mit einfachen Handgriffen leicht vom Fahrzeug zu lösen.

### Darstellung der Erfindung: Aufgabe, Lösung und Vorteile

Eine Trennung von Verschleißteilen und wertigen Komponenten des Radantriebs hat jedoch den Vorteil, dass Verschleißteile von Anfang an auf eine bestimmte Betriebsdauer ausgelegt werden können und damit billiger und weniger aufwendig gefertigt werden können. Zudem erhöht die Festlegung einer vorherbestimmten Betriebsdauer auch die Betriebssicherheit, da sichergestellt werden kann, dass die Komponenten diese Betriebsdauer überstehen und danach einfach getauscht werden. Der Austausch des Rades ist in jedem Fall regelmäßig notwendig, wobei mit dem Rad bei einer unkomplizierten Befestigung am Fahrzeug auch die dort integrierten Verschleißteile, wie Getriebe, Bremsen und Radlager unkompliziert mit gewechselt werden können. Für Instandsetzungsarbeiten und zur Inspektion müssen daher die wertigen Komponenten, wie Motor, Motorelektronik, Sensorik und Haltebremse, welche im oder am Fahrzeug verbleiben können und in oder an diesem verbaut sind, nicht entnommen werden, da die verschleißbehafteten Antriebskomponenten am Äußeren des Fahrzeugs im Rad untergebracht sind und zudem regelmäßig und zeitgleich mit diesem getauscht werden. Dadurch wird auch sichergestellt, dass die Komponenten nicht unabhängig voneinander einzeln nacheinander ausfallen, was die Zuverlässigkeit und die Verfügbarkeit des Fahrzeuges erhöht, da bei einem Ausfall einzelner Komponenten das Fahrzeug regelmäßig zum Stillstand kommt beziehungsweise dieses zum Totalausfall des Radantriebs führt.

Der Erfindung liegt die Aufgabe zugrunde, bei einem Radantrieb der eingangs genannten Art eine bauliche Trennung von Verschleißkomponenten und wertigen Komponenten zu fördern, sodass die Verschleißkomponenten im Rad des Fahrzeuges untergebracht sind und mit diesem durch einen einfachen Mechanismus getauscht werden können.

Die vorliegende Erfindung löst dies dadurch, dass der Radantrieb aus mindestens zwei voneinander trennbaren Einheiten besteht, wobei die erste Einheit, welche in ein Rad des Fahrzeuges integriert ist, das Getriebe des Radantriebs umfasst, wie im Anspruch 1 beschrieben.

Der erfindungsgemäße Radantrieb für ein Fahrzeug umfasst einen Motor und ein Getriebe. Bevorzugt ist das Fahrzeug des Radantriebs dabei ein Flurförderzeug oder ein kleines Transportgerät von einigen Tonnen, vorzugsweise bis zu fünf Tonnen, Gewicht, welches auch unbemannt geführt werden kann. Alternativ kann der Antrieb jedoch auch für ein Förderband, im Bereich der Kranförderung oder generell in der Fördertechnik genutzt werden.

Der erfindungsgemäße Radantrieb wird aus mindestens zwei voneinander trennbaren Einheiten zusammengesetzt, wobei mindestens eine erste Einheit in das Rad des Fahrzeuges integriert ist und mit ihm eine bauliche Einheit bildet, wobei im Falle der Trennung der Einheiten des Radantriebs die erste Einheit mit dem Rad gemeinsam getauscht werden kann, beispielsweise bei einem Radwechsel. Hierbei kann der Radantrieb aber auch aus weiteren Einheiten bestehen, welche entweder im Rad oder im Fahrzeug verbaut sind und zusätzliche Komponenten enthalten.

Das Rad ist dabei diejenige Fahrzeugkomponente, mit der das Fahrzeug auf dem Untergrund oder einer Kette respektive einem Riemen eines Raupenfahrwerks steht und fährt, und die sich bei der Fortbewegung des Fahrzeugs auf dem Untergrund bewegt, um die Position des Fahrzeugs zu verändern. Das Rad kann dabei außen eine Beschichtung oder ein abnehmbares Teil umfassen, welches besonders darauf ausgelegt ist, mit der Umgebung in Berührung zu kommen, wie beispielsweise eine Lauffläche oder einen Reifen. Als bauliche Einheit versteht man eine aus mehreren Komponenten aufgebaute Gruppe, welche nach dem Aufbau an andere Komponenten montiert und demontiert werden kann, wobei die Einheiten innerhalb der Einheit miteinander verbunden bleiben.

Eine zweite Einheit des Radantriebs verbleibt bei einer Trennung der verschiedenen Einheiten des Radantriebs erfindungsgemäß im Fahrzeug, so also auch bei einem Austausch der Komponenten des Rades, einem Radwechsel oder bei einfachen Inspektionsarbeiten.

Erfindungsgemäß ist das Getriebe des Radantriebs in der ersten Einheit, welche in das Rad des Fahrzeuges integriert ist, angebracht. Das Getriebe im Rad kann dabei bevorzugt ein Planetengetriebe sein und beispielsweise aus einem einteiligen Planetenträger mit beidseitigen Planetenlagerungen bestehen oder bevorzugterweise auch ein Stufenplanetengetriebe sein. Die erste Einheit des Radantriebs beinhaltet bevorzugterweise alle Verschleißteile des Radantriebs, was belastete Kugellager, Zahnräder, vor allem des Getriebes, Schmierstoffe, Dichtungen, den Radbelag oder eine optionale Betriebsbremse umfasst. Dagegen werden wertige Komponenten des Radantriebs, die also keine Verschleißteile sind und nicht in einem regelmäßigen Turnus gewartet oder getauscht werden müssen, in der zweiten Einheit des Radantriebs verbaut, wobei diese dadurch beispielsweise Motor, eine Motorwelle, Sensorik oder die Haltebremse des Radantriebs umfasst. Der Motor kann dabei aus einem elektrischen Antriebssystem, beispielsweise einem Elektromotor, bestehen, alternativ aber auch ein Verbrennungsmotor oder ein mit einer anderen Antriebstechnik ausgestatteter Motor sein.

Bevorzugterweise ist das Rad mit der ersten Einheit des Radantriebs rundum gegen Fett- oder Ölaustritt abgedichtet, sodass die Schmierstoffe der ersten Einheit in dieser verbleiben. Dadurch können die Schmiermittel mit einem Tauschen des Rades und der ersten Einheit mit getauscht werden, wobei kein großer Verlust des Schmiermittels zwischen dem Austauschen stattfindet.

Vorzugsweise erfolgt der Radwechsel des Rades mit der ersten Einheit des Radantriebs durch das Lösen von wenigen Schrauben, besonders bevorzugterweise von drei Schrauben. Dabei können die Schrauben die Trägerplatte des Rades direkt am Gehäuse des Fahrzeugs befestigen oder aber an einem anderen Befestigungsträger angebracht werden. Bevorzugterweise ist der Ort der Anbringung der Schrauben von außerhalb des Fahrzeugs gut zugänglich, sodass ein Entfernen der Schrauben und ein Lösen der Verbindung zwischen der ersten Einheit und der zweiten Einheit bzw. dem Fahrzeug unkompliziert und schnell erfolgen kann. Vorzugsweise sind die Verbindungen an der Trägerplatte beziehungsweise dem Befestigungsträger gut abgedichtet, damit im verbundenen Zustand nur wenig Schmutz und Staub ins Innere des Radantriebs gelangen kann. Die Verbindung kann jedoch statt über Schrauben auch über Klemmen oder Stecker oder eine andere lösbare Verbindungsart realisiert werden.

Bevorzugterweise umfasst die erste Einheit, welche in einem Rad des Fahrzeuges integriert ist, auch das oder die Radlager des Radantriebs. Besonders bevorzugt umfasst die erste Einheit dabei vor allem das Hauptradlager, welches die Fahrzeuggewichtkraft überträgt. Das Radlager beziehungsweise das Hauptradlager, welches als Kugellager ausgeformt sein kann, befindet sich dabei bevorzugterweise in der Felge des Rades. Besonders bevorzugt sind alle Lager des Getriebes und des Rades in der ersten Einheit enthalten. Außerdem kann die Felge bevorzugt eine Hohlradverzahnung besitzen und vorzugsweise den Lagersitz für das Kugellager darstellen.

Bevorzugterweise wird bei einem Austausch des Rades die Kraftübertragung der ersten und zweiten Einheit des Radantriebs an einer Kupplung getrennt, wobei sich die Kupplung zwischen dem Motor, welcher in der zweiten Einheit des Radantriebs angeordnet ist, und dem Getriebe, welches in der ersten Einheit des Radantriebs angeordnet ist, befindet. Im geschlossenen Zustand wird dabei die Kraft des Motors über die Motorwelle und die Kupplung auf das Getriebe im Rad übertragen. Die Kupplung stellt somit eine Verbindung zwischen der Motorwelle und dem in ein Rad integrierten Getriebe dar und kann beide voneinander entkoppeln, was eine einfache Trennbarkeit von Motor und Getriebe ermöglicht. Bevorzugterweise ist das Getriebe ein Planetengetriebe, wobei die Kupplung eine Aufnahme für das Sonnenrad des Planetengetriebes besitzt und das Planetengetriebe über das Sonnenrad angetrieben wird.

Das Rad mit integriertem Getriebe kann dabei zudem über mehrere axiale Schrauben, vorzugsweise drei Schrauben, befestigt sein, um eine einfache Trennbarkeit vom Motor sicherzustellen. Besonders bevorzugt kann die Kupplung als eine lösbare und/oder streckbare und/oder klemmbare Kupplung ausgeformt sein.

Alternativ zur Kupplung kann die erste Einheit von der zweiten Einheit des Radantriebs auch dadurch getrennt werden, dass das Sonnenrad des Getriebes aus einem Planetenrad des Getriebes herausgezogen wird, wobei sich die beiden Einheiten voneinander trennen. Da hierbei keine Kupplung benötigt wird, kann das Material dazu eingespart werden.

Bevorzugterweise kann der Radantrieb auch eine Bremse, besonders bevorzugt eine Haltebremse, umfassen, welche in der zweiten Einheit angeordnet ist, die bei einem Austausch des Rades und der ersten Einheit im Fahrzeug verbleibt. Die Haltebremse kann im Stillstand des Fahrzeugs angezogen werden, um die Bewegung der Räder des Fahrzeugs zu blockieren. Die Haltebremse wird also im Stillstand des Fahrzeuges angezogen, um ein ungewolltes Losrollen oder Inbewegungsetzen des Fahrzeuges zu verhindern. Bevorzugterweise blockiert die Haltebremse dabei die Motorwelle in der zweiten Einheit des Radantriebs. Die in der Haltebremse angeordneten Bremsbacken sind keine Verschleißteile, weswegen hier eine häufige Wartung nicht notwendig ist und auch kein häufiger Austausch der Komponenten stattfindet.

Besonders bevorzugt umfasst der Radantrieb eine Bremse, insbesondere eine Betriebsbremse, welche in der ersten Einheit angeordnet ist und bei einem Austausch des Rades mit diesem gewechselt wird. Die Betriebsbremse ist dabei für das Bremsen während des Betriebs des Fahrzeugs zuständig, also für das Verlangsamen der Motorwelle während der Fahrt des Fahrzeuges oder das Bremsen der Getrieberäder. Die Betriebsbremse hat demnach einen deutlich größeren Verschleiß als die Haltebremse, da diese nicht nur zur Erhaltung des Stillstands der Welle, sondern tatsächlich zur Verringerung der Geschwindigkeit verwendet wird.

Besonders bevorzugt umfasst der Radantrieb zudem eine Felge, welche im Rad integriert ist. Dabei kann die Felge innen als Lagersitz des Radlagers, beispielsweise ausgeführt als Kugellager, ausgebildet sein und eine Hohlradverzahnung aufweisen. Dadurch können Bauteile eingespart werden, die das Radlager halten, was zu einem geringeren Materialaufwand führt. Besonders bevorzugt nimmt die Felge dabei zwei Radlager auf, welche auf beiden Seiten der Planetenräder des Getriebes angeordnet sind. Zwischen den beiden Radlagern ist somit vorzugsweise das Hohlrad des Getriebes angeordnet, wobei das Hohlrad bevorzugt eine Hohlradverzahnung der Felge ist. Das Getriebe ist hierbei bevorzugt ein Planetengetriebe, wobei sich vorzugsweise mindestens eines der Radlager zumindest teilweise auf einem Planetenträger des Planetengetriebes abstützt.

In einer bevorzugten Ausführungsform des Radantriebs umfasst die Felge des Rades innen eine Hohlradverzahnung, in welche andere Getrieberäder, bspw. Planetenräder, eingreifen können. Somit ist die Felge des Rades als Hohlrad des Getriebes, besonders bevorzugt des Planetengetriebes, ausgebildet. Dadurch kann das Getriebe direkt über das Hohlrad abtreiben, und die Kraft über die Felge auf das Rad übertragen, wobei keine weiteren Bauteile nötig sind. Der Radbelag kann dabei direkt auf das Rad aufgegossen werden, beispielsweise auf das Getriebehohlrad oder die Felge, wobei der Radbelag insbesondere eine Gummi- oder Polyurethan-Lauffläche sein kann.

Bevorzugterweise ist das Getriebe in diesem Fall ein Planetengetriebe, damit kein Achsversatz zwischen Motor und Getriebe auftritt und hohe Drehmomente übertragen werden können. Besonders bevorzugt ist das Getriebe des Radantriebs dabei ein Stufenplanetengetriebe, welches eine hohe Untersetzung bei besonders kurze Baulänge ermöglicht. Ein Stufenplanetengetriebe enthält dabei mindestens einen Stufenplaneten, wobei ein Stufenplanet aus zwei verdrehfest miteinander verbundenen Stirnrädern besteht, welche auf einer gemeinsamen Achse drehen oder mit einer gemeinsamen Welle rotieren. Ganz besonders bevorzugt ist das Planetengetriebe ein Doppelplanetengetriebe, bei welchem zwischen Sonnenrad und Hohlrad mindestens ein Planetenpaar, hier auch Doppelplanet genannt, aus zwei miteinander kämmenden Einzelplaneten angeordnet ist. Bevorzugterweise ist einer der Einzelplaneten jedes Planetenpaares des Doppelplanetengetriebes ein Stufenplanet. Bei einem Planeten- und/oder Doppelplaneten- und/oder Stufenplanetengetriebe ist bevorzugterweise das Sonnenrad der Antrieb des Getriebes, wobei der Abtrieb über das Hohlrad erfolgt.

Der Radantrieb umfasst bevorzugterweise mindestens einen Sensor, wobei der Sensor in der zweiten Einheit, welche im Fahrzeug verbleibt, angeordnet ist. Der Sensor kann dabei beispielsweise ein Drehzahlsensor oder ein Sicherheitsdrehgeber sein, bevorzugterweise also ein Sensor, welcher keine Verschleißteile umfasst.

In einer bevorzugten Ausführungsform des Radantriebs wird das Rad mit der integrierten ersten Einheit des Radantriebs über eine Flanschverbindung an der zweiten Einheit oder direkt am Fahrzeuggehäuse befestigt. Dabei befindet sich in der ersten Einheit das Getriebe. Im Gehäuse des Fahrzeuges befindet sich die zweite Einheit des Radantriebs mit dem Motor. Die erste Einheit wird dabei nur mit wenigen Schrauben über die Flanschverbindung an der zweiten Einheit oder am Fahrzeuggehäuse gehalten, sodass die erste Einheit einfach und mit wenigen Handgriffen von der zweiten Einheit und/oder dem Fahrzeuggehäuse getrennt werden kann, wenn das Rad mit der ersten Einheit des Radantriebs getauscht wird. Bevorzugterweise erfolgt die Flanschverbindung zwischen erster Einheit und zweiter Einheit und/oder Fahrzeuggehäuse mit nicht mehr als 3 Schrauben, wobei im Fall der Befestigung der ersten Einheit an der zweiten Einheit die zweite Einheit über eine weitere Flanschbefestigung mit weiteren Schrauben am Fahrzeug befestigt wird. Die Flanschbefestigung ist zudem bevorzugt abgedichtet, sodass im verbundenen Zustand kein Schmutz und kein Staub in den Radantrieb eindringen. Als Flanschverbindung wird hier eine verschraubte flächige Befestigung verstanden, die vornehmlich über Flächenpressung trägt, aber auch formschlüssige Elemente wie bspw. Zentrierbunde enthalten kann, welche auch zur Kraftübertragung dienen können. Die Verschraubung erfolgt vornehmlich axial und kann innerhalb und/oder außerhalb der Wirkfläche der Flanschverbindung liegen. Die Flanschverbindung kann auch einen ein- oder mehrteiligen Befestigungsträger umfassen.

### Kurze Beschreibung der Zeichnungen

Die folgenden vorteilhaften Ausführungsformen und Ausführungsbeispiele der Erfindung werden nachstehend anhand der Zeichnungen näher erläutert. Es zeigen schematisch:
- Figur 1: eine Explosionsdarstellung des Radantriebs mit der ersten und zweiten Einheit,
- Figur 2: eine Explosionsdarstellung der ersten Einheit des Radantriebs mit Planetengetriebe und Kugellager, und
- Figur 3: eine senkrechte Schnittdarstellung durch das Zentrum des Rades inklusive der ersten Einheit des Radantriebs und Teile der zweiten Einheit.

### Bevorzugte Ausführungsformen der Erfindung

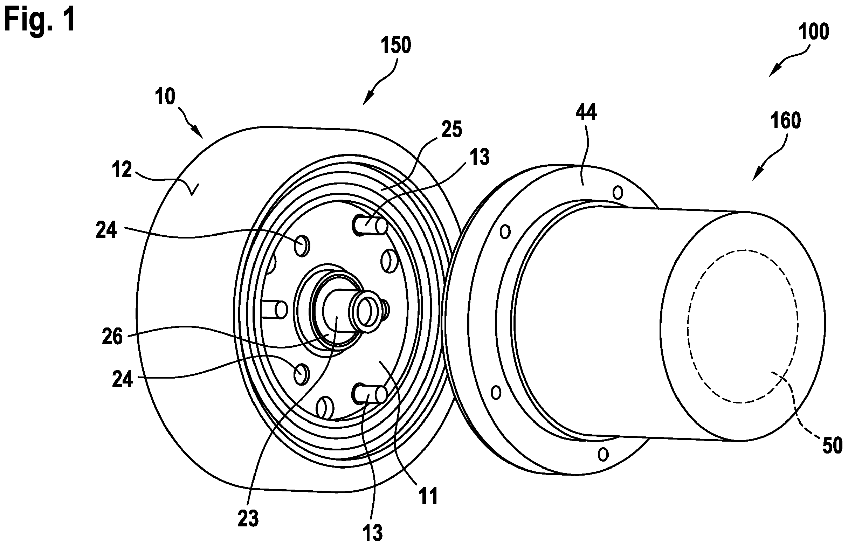

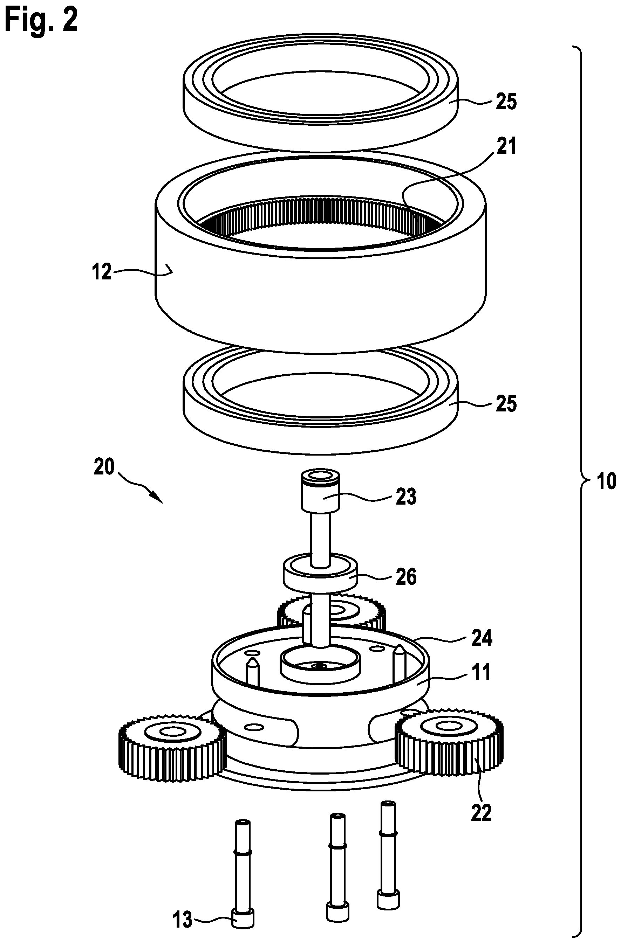

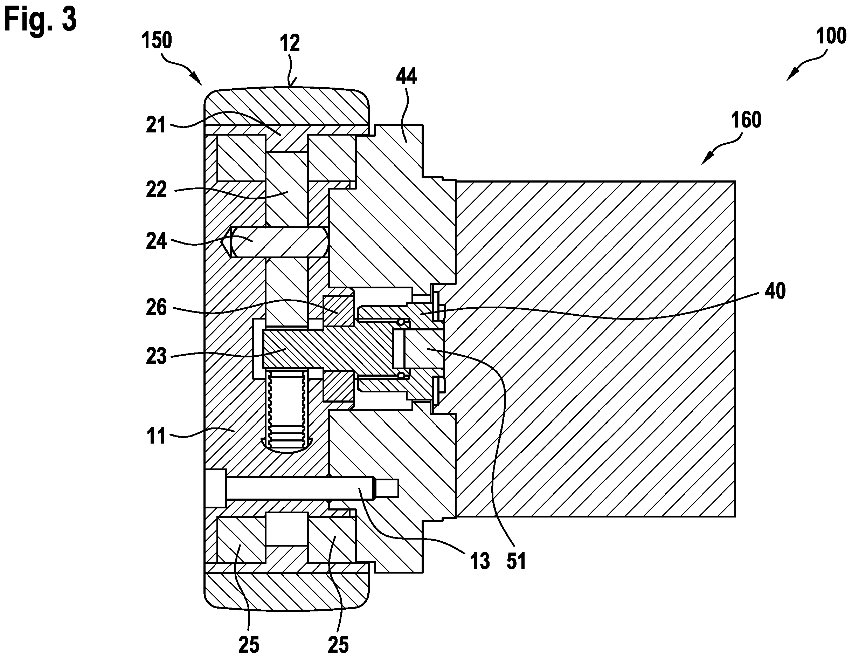

Der Radantrieb 100, welcher in Figur 1 in zwei Einzelteile aufgespaltet gezeigt wird, besitzt eine erste Einheit 150, welche in ein Rad 10 eines Fahrzeugs integriert ist. Im Zentrum der ersten Einheit 150 ist das Sonnenrad 23 angebracht, welches von einem Lager 26 umfasst wird. Das Lager 26 ist in eine Trägerplatte 11 eingebettet, welche Aufnahmen für die Planetenräder 22 des Getriebes 20 (in Figur 2 dargestellt) besitzt, wobei die Planetenräder 22 (nicht abgebildet, siehe Figur 2) um die Planetenachsen 24 rotieren und das Sonnenrad 23 sich im Zentrum befindet. Das Sonnenrad 23 stellt dabei gleichzeitig die Aufnahme für die Motorwelle 51 (nicht dargestellt, siehe Figur 3) dar. Um die Trägerplatte 11 herum ist das Hohlrad 21 (nicht abgebildet, siehe Figur 2) des Getriebes 20 gelagert, wobei das Hohlrad 21 (nicht abgebildet, siehe Figur 2) von einem Laufmantel bzw. einer Lauffläche 12 umgeben ist. Zwischen Trägerplatte 11 und Hohlrad 21 (nicht abgebildet, siehe Figur 2) sind auf beiden Seiten je ein Radlager 25, welches als Kugellager ausgeformt ist, angeordnet. Die erste Einheit 150 des Radantriebs 100 kann über einen Befestigungsträger 44 mit der zweiten Einheit 160 des Radantriebes verbunden werden. Dazu besitzt die erste Einheit 150 drei Schrauben 13. Im Zentrum des Befestigungsträgers 44 befindet sich die Kupplung 40 (nicht abgebildet, siehe Figur 3), welche als Verbindung zwischen Sonnenrad 23 und Motorwelle 51 (nicht abgebildet, siehe Figur 3) ausgestaltet ist. Die Motorwelle 51 (nicht abgebildet, siehe Figur 3) befindet sich in der zweiten Einheit 160 und zwar auf Höhe des Sonnenrades 23 der ersten Einheit 150. Der Befestigungsträger 44 hat dabei ebenso wie die Trägerplatte 11 Vorrichtungen für Dichtungen, um die erste Einheit 150 vollständig abzudichten. In der zweiten Einheit 160 ist der Motor 50 integriert. In dem Motor 50 oder dem Befestigungsträger können optional auch eine Haltebremse 52 (nicht abgebildet) und Sensorik 53 (nicht abgebildet) enthalten sein.

Figur 2 zeigt eine Explosionszeichnung der ersten Einheit 150 mit zwei Rillenkugellagern 25, welche in das Hohlrad 21 des Getriebes 20 eingefasst sind. Das Hohlrad 21 wird von der Lauffläche 12 umschlossen. Auf der Trägerplatte 11 sind Ausnehmungen für drei Planetenräder 22, welche mit dem Sonnenrad 23 in der Mitte der Trägerplatte 11 und mit dem Hohlrad 21 am Rand kämmen. Die Planetenräder rotieren um die Planetenachsen 24. Drei Schrauben 13 erlauben die Anbringung der Trägerplatte 11 an einem Befestigungsträger 44 (nicht abgebildet, siehe Figur 1) beziehungsweise direkt am Gehäuse des Fahrzeuges. Das Sonnenrad 23 in der Trägerplatte 11 wird dabei ebenfalls von einem Lager 26 umgeben.

Figur 3 zeigt einen Querschnitt durch eine in ein Rad 10 integrierte erste Einheit 150 und die Befestigung an der zweiten Einheit 160 des Radantriebes 100 mittels eines Befestigungsträgers 44. Dabei sind im Zentrum der ersten Einheit 150 das Sonnenrad 23 und sein Lager 26 angebracht. Die Verbindung zwischen dem Sonnenrad 23, welches Bestandteil der ersten Einheit 150 des Radantriebs 100 ist, und der zweiten Einheit 160 bildet die Kupplung 40. Die erste Einheit 150 ist dabei über eine Trägerplatte 11 und mehrere Schrauben 13 an dem Befestigungsträger 44 angebracht. Die erste Einheit 150 umfasst in der angeführten Ausführungsform um das Sonnenrad 23 herum mehrere Planetenräder 22, welche sowohl mit dem Sonnenrad 23 als auch mit dem Hohlrad 21 kämmen. Das Hohlrad 21 wird von einer Lauffläche 12 umfasst, welche den äußeren Rand des Rades 10 (hier nicht eingezeichnet, siehe Figur 2) bildet. Zwischen Hohlrad 21 und Trägerplatte 11 sind beidseitig der Planetenräder 22 zwei Kugellager 25 angebracht. Die Planetenräder 22 drehen sich dabei um eine Planetenachse 24, welche in der Trägerplatte eingebracht ist.

### Bezugszeichenliste

- 100: Radantrieb
- 150: erste Einheit
- 160: zweite Einheit

- 10: Rad
- 11: Trägerplatte
- 12: Lauffläche
- 13: Schrauben

- 20: Getriebe
- 21: Hohlrad
- 22: Planetenrad
- 23: Sonnenrad
- 24: Planetenachse
- 25: Kugellager
- 26: Lager

- 40: Kupplung
- 44: Befestigungsträger

- 50: Motor
- 51: Motorwelle
- 52: Haltebremse
- 53: Sensorik

## Patentansprüche

1. Radantrieb (100) mit Rad (10) für ein Fahrzeug, insbesondere ein Flurförderzeug, wobei der Radantrieb einen Motor (50), und ein Getriebe (20) umfasst und (100) aus mindestens zwei voneinander trennbaren Einheiten (150, 160) besteht,
**gekennzeichnet dadurch,**
**dass** mindestens eine erste der Einheiten (150) in das Rad (10) des Fahrzeugs integriert ist und mit dem Rad (10) eine bauliche Einheit bildet, wobei diese Einheit (150) das Getriebe (20) umfasst und mindestens eine zweite der Einheiten (160), welche bei einer Trennung der Einheiten im Fahrzeug verbleibt, den Motor (50) umfasst, um eine bauliche Trennung von Verschleißkomponenten und wertigen Komponenten zu fördern.

2. Radantrieb (100) mit Rad (10) nach Anspruch 1,
**gekennzeichnet dadurch,**
**dass** die erste Einheit (150) ein Radlager (25), bevorzugt ein Hauptradlager umfasst.

3. Radantrieb (100) mit Rad (10) nach einem der vorhergehenden Ansprüche,
**gekennzeichnet dadurch,**
**dass** bei einem Austausch des Rades (10) die erste (150) und zweite Einheit (160) des Radantriebes an einer Kupplung (40) trennbar ist, wobei die Kupplung (40) zwischen einer Motorwelle (51) des Motors (50) und dem Getriebe (20) angeordnet ist.

4. Radantrieb (100) mit Rad (10) nach Anspruch 3,
**gekennzeichnet dadurch,**
**dass** die Kupplung (40) als eine lösbare und/oder steckbare und/oder klemmbare Kupplung (40) ausgeformt ist.

5. Radantrieb (100) mit Rad (10) nach einem der vorhergehenden Ansprüche,
**gekennzeichnet dadurch,**
**dass** der Radantrieb (100) eine Bremse, vorzugsweise eine Haltebremse (52), umfasst, welche in der zweiten Einheit (160) angeordnet ist und bei einem Austausch des Rades (10) im Fahrzeug verbleibt.

6. Radantrieb (100) mit Rad (10) nach einem der vorhergehenden Ansprüche,
**gekennzeichnet dadurch,**
**dass** der Radantrieb (100) eine Bremse, vorzugsweise eine Betriebsbremse, umfasst, welche in der ersten Einheit (150) angeordnet ist und bei einem Austausch des Rades (10) mit getauscht wird.

7. Radantrieb (100) mit Rad (10) nach einem der vorhergehenden Ansprüche,
**gekennzeichnet dadurch,**
**dass** eine Felge des Rades (100) innen als Lagersitz des Radlagers (25) ausgebildet ist.

8. Radantrieb (100) mit Rad (10) nach einem der vorhergehenden Ansprüche,
**gekennzeichnet dadurch,**
**dass** die Felge des Rades (10) auf einer Innenseite die Hohlradverzahnung des Getriebes (20) trägt.

9. Radantrieb (100) mit Rad (10) nach einem der vorhergehenden Ansprüche, **gekennzeichnet dadurch,**
**dass** das Getriebe (20) ein Planetengetriebe ist.

10. Radantrieb (100) mit Rad (10) nach einem der vorhergehenden Ansprüche, **gekennzeichnet dadurch,**
**dass** das Getriebe (20) ein Stufenplanetengetriebe ist.

11. Radantrieb (100) mit Rad (10) nach Anspruch 9 oder 10,
**gekennzeichnet dadurch,**
**dass** das Getriebe (20) ein Sonnenrad (23) und mindestens ein weiteres Zahnrad, insbesondere ein Planetenrad, umfasst und bei einem Austausch des Rades die erste Einheit (150) durch das Herausziehen des Sonnenrades (23) aus dem mindestens einen Planetenrad von der zweiten Einheit (160) trennbar ist.

12. Radantrieb (100) mit Rad (10) nach einem der Ansprüche 9 bis 11,
**gekennzeichnet dadurch,**
**dass** die Hohlradverzahnung des Getriebes (20) zwischen mindestens zwei Radlagern angeordnet ist, von denen sich mindestens eines zumindest teilweise auf einem Planetenträger abstützt.

13. Radantrieb (100) mit Rad (10) nach einem der vorhergehenden Ansprüche,
**gekennzeichnet dadurch,**
**dass** der Radantrieb (100) mindestens einen Sensor (53), beispielsweise einen Drehzahlsensor, umfasst, welcher in der zweiten Einheit (160) angeordnet ist.

14. Radantrieb (100) mit Rad (10) nach einem der vorhergehenden Ansprüche,
**gekennzeichnet dadurch,**
**dass** das Rad (10) und die erste Einheit (150) über eine Flanschverbindung am Gehäuse des Fahrzeugs oder an der zweiten Einheit befestigt sind.

## Claims

1. Wheel drive (100) with wheel (10) for a vehicle, in particular an industrial truck, wherein the wheel drive comprises a motor (50) and a gearbox (20) and (100) consists of at least two units (150, 160) which can be separated from one another,
**characterized in that**
at least a first of the units (150) is integrated into the wheel (10) of the vehicle and forms a structural unit with the wheel (10), wherein this unit (150) comprises the gearbox (20) and at least a second of the units (160), which remains in the vehicle when the units are separated, comprises the motor (50) in order to promote structural separation of wear components and valuable components.

2. Wheel drive (100) with wheel (10) according to claim 1,
**characterized in that**
the first unit (150) comprises a wheel bearing (25), preferably a main wheel bearing.

3. Wheel drive (100) with wheel (10) according to one of the preceding claims,
**characterized in that**
when the wheel (10) is replaced, the first (150) and second unit (160) of the wheel drive can be separated at a clutch (40), wherein the clutch (40) is arranged between a motor shaft (51) of the motor (50) and the gearbox (20).

4. Wheel drive (100) with wheel (10) according to claim 3,
**characterized in that**
the clutch (40) is formed as a detachable and/or pluggable and/or clampable clutch (40).

5. Wheel drive (100) with wheel (10) according to one of the preceding claims, **characterized in that**
the wheel drive (100) comprises a brake, preferably a holding brake (52), which is arranged in the second unit (160) and remains in the vehicle when the wheel (10) is replaced.

6. Wheel drive (100) with wheel (10) according to one of the preceding claims,
**characterized in that**
the wheel drive (100) comprises a brake, preferably an operational brake, which is arranged in the first unit (150) and is also replaced when the wheel (10) is replaced.

7. Wheel drive (100) with wheel (10) according to one of the preceding claims,
**characterized in that**
a rim of the wheel (100) is formed on the inside as a bearing seat of the wheel bearing (25).

8. Wheel drive (100) with wheel (10) according to one of the preceding claims,
**characterized in that**
the rim of the wheel (10) carries the ring gear teeth of the gearbox (20) on an inner side.

9. Wheel drive (100) with wheel (10) according to one of the preceding claims, **characterized in that**
the gearbox (20) is a planetary gearbox.

10. Wheel drive (100) with wheel (10) according to one of the preceding claims, **characterized in that**
the gearbox (20) is a stepped planetary transmission.

11. Wheel drive (100) with wheel (10) according to claim 9 or 10,
**characterized in that**
the gearbox (20) comprises a sun gear (23) and at least one further gear, in particular a planetary gear, and, when the gear is replaced, the first unit (150) can be separated from the second unit (160) by pulling the sun gear (23) out of the at least one planetary gear.

12. Wheel drive (100) with wheel (10) according to any one of claims 9 to 11,
**characterized in that**
the ring gear teeth of the gearbox (20) are arranged between at least two wheel bearings, at least one of which is at least partially supported on a planetary carrier.

13. Wheel drive (100) with wheel (10) according to one of the preceding claims,
**characterized in that**
the wheel drive (100) comprises at least one sensor (53), for example a speed sensor, which is arranged in the second unit (160).

14. Wheel drive (100) with wheel (10) according to one of the preceding claims,
**characterized in that**
the wheel (10) and the first unit (150) are attached to the housing of the vehicle or to the second unit via a flange connection.

## Revendications

1. Entraînement de roue (100) avec roue (10) pour un véhicule, en particulier un chariot de manutention, l'entraînement de roue comprenant un moteur (50), et un engrenage (20) et (100) se composant d'au moins deux unités (150, 160) séparables l'une de l'autre,
**caractérisé en ce que**
au moins une première des unités (150) est intégrée dans la roue (10) du véhicule et forme avec la roue (10) une unité structurelle, cette unité (150) comprenant l'engrenage (20) et au moins une deuxième des unités (160), qui reste dans le véhicule lors d'une séparation des unités, comprenant le moteur (50) afin de favoriser une séparation structurelle des composants d'usure et des composants de valeur.

2. Entraînement de roue (100) avec roue (10) selon la revendication 1,
**caractérisé en ce que**
la première unité (150) comprend un palier de roue (25), de préférence un palier de roue principal.

3. Entraînement de roue (100) avec roue (10) selon l'une des revendications précédentes,
**caractérisé en ce que**
lors d'un remplacement de la roue (10), la première (150) et la deuxième unité (160) de l'entraînement de roue peuvent être séparées au niveau d'un accouplement (40), l'accouplement (40) étant disposé entre un arbre moteur (51) du moteur (50) et l'engrenage (20).

4. Entraînement de roue (100) avec roue (10) selon la revendication 3,
**caractérisé en ce que**
l'accouplement (40) est formé comme un accouplement (40) détachable et/ou enfichable et/ou serrable.

5. Entraînement de roue (100) avec roue (10) selon l'une des revendications précédentes,
**caractérisé en ce que**
l'entraînement de roue (100) comprend un frein, de préférence un frein de retenue (52), qui est disposé dans la deuxième unité (160) et qui reste dans le véhicule lors d'un remplacement de la roue (10).

6. Entraînement de roue (100) avec roue (10) selon l'une des revendications précédentes,
**caractérisé en ce que**
l'entraînement de roue (100) comprend un frein, de préférence un frein de service, qui est disposé dans la première unité (150) et qui est également remplacé lors d'un remplacement de la roue (10).

7. Entraînement de roue (100) avec roue (10) selon l'une des revendications précédentes,
**caractérisé en ce que**
une jante de la roue (100) est réalisée à l'intérieur comme siège de palier du palier de roue (25).

8. Entraînement de roue (100) avec roue (10) selon l'une des revendications précédentes,
**caractérisé en ce que**
la jante de la roue (10) porte sur un côté intérieur la denture de roue creuse de l'engrenage (20).

9. Entraînement de roue (100) avec roue (10) selon l'une des revendications précédentes,
**caractérisé en ce que**
l'engrenage (20) est un engrenage planétaire.

10. Entraînement de roue (100) avec roue (10) selon l'une des revendications précédentes,
**caractérisé en ce que**
l'engrenage (20) est un engrenage planétaire à étages.

11. Entraînement de roue (100) avec roue (10) selon la revendication 9 ou 10, **caractérisé en ce que**
l'engrenage (20) comprend une roue solaire (23) et au moins une autre roue dentée, en particulier une roue planétaire, et que, lors d'un remplacement de la roue, la première unité (150) peut être séparée de la deuxième unité (160) par l'extraction de la roue solaire (23) de l'au moins une roue planétaire.

12. Entraînement de roue (100) avec roue (10) selon l'une des revendications 9 à 11,
**caractérisé en ce que**
la denture de roue creuse de l'engrenage (20) est disposée entre au moins deux paliers de roue, dont au moins un s'appuie au moins partiellement sur un porte planétaire.

13. Entraînement de roue (100) avec roue (10) selon l'une des revendications précédentes,
**caractérisé en ce que**
l'entraînement de roue (100) comprend au moins un capteur (53), par exemple un capteur de vitesse de rotation, qui est disposé dans la deuxième unité (160).

14. Entraînement de roue (100) avec roue (10) selon l'une des revendications précédentes,
**caractérisé en ce que**
la roue (10) et la première unité (150) sont fixées au boîtier du véhicule ou à la deuxième unité par une liaison à bride.
